# EUROPEAN PATENT SPECIFICATION

(11) **EP 4 536 547 B1**
(45) Date of publication and mention of the grant of the patent: **18.11.2026**
(21) Application number: 22751864.4
(22) Date of filing: 07.06.2022
(51) Int. Cl.: B62K 25/30, B62M 9/16, B62K 25/28

(54) **BICYCLE WITH REAR SUSPENSION AND RELATIVE DEVICE FOR COMPENSATING THE TRAVEL OF SAID SUSPENSION**
FAHRRAD MIT HINTERRADAUFHÄNGUNG UND ENTSPRECHENDE VORRICHTUNG ZUR KOMPENSATION DES FEDERWEGS DIESER AUFHÄNGUNG
BICYCLETTE À SUSPENSION ARRIÈRE ET DISPOSITIF CONNEXE DE COMPENSATION DU DÉBATTEMENT DE LADITE SUSPENSION

(43) Date of publication of application: 16.04.2025
(73) Proprietor: SRAM, LLC, Chicago, IL 60607 (US)
(72) Inventor: DRAGONI, Fabrizio, 21100 Varese (VA) (IT)
(74) Representative: Thum, Bernhard
(86) International application number: PCT/IT2022/000026
(87) International publication number: WO 2023/238164

(56) References cited:
- EP-A1- 2 706 002
- WO-A1-2020/194177

## Description

The present invention relates to a bicycle with rear suspension and a relative device for compensating the travel of said suspension. The invention is particularly adapted to mountain bikes, however applications to other bicycles with other intended uses or other fields are not excluded.

### STATE OF THE ART

"Full suspended" mountain bikes, i.e. provided with rear suspension, are known in the field of bicycles.

The rear suspension generates a travel of the rear wheel with respect to the frame with undesired effects on the drive, in particular a pull of the chain in compression step, as though received from a jump or the impact with a bump. This generates a violent rotation of the pedals opposite to the advancement rotation, which destabilizes the driver, up to losing contact with his/her feet. From a mechanical viewpoint, the chain is highly stressed and could end up breaking. The greater the displacement of the wheel with respect to the frame, the greater the effect is felt and is damaging.

It is worth noting that there are travel standards according to the category of use of the bicycle. The travel of the modern MTB (mountain bike) frames goes from a minimum of 80 mm (XC race) to a maximum of 240 mm (downhill race). All the other categories are in the middle.

The problem is particularly felt in the "downhill" categories, i.e. those with travels of the rear suspension from 130/140 mm and up. This does not mean that the problem is not felt also in the other categories. Certainly, the travels indicated may be considered a maximum limit that cannot be overcome with the current technology.

The Applicant has solved the problem by introducing a device that allows the rotation between the crown gear and the cranks of the crankset to compensate for the travel of the damper. This device is described in international patent application WO2020194177 and can also be applied to the rear wheel hub.

However, the Applicant noted that such a device necessarily requires adjustment to adapt to countless conditions of use.

The applicant notes that it may be desirable to find the right compromise for each condition of use between the damper travel that can be compensated for by the device and the resulting idle stroke of the crank felt when resuming pedalling. This stroke in fact increases as the travel increases and is pre-set in the bike, i.e. to date it cannot be easily changed.

The general object of the present invention is to overcome all or some of the drawbacks of the prior art.

A preferred object of the present invention is to introduce a system for adjusting the travel compensation device of the damper.

A further preferable object is to allow the provision of a compensation adjustment system that is easy and practical to use.

Another preferred object of the present invention is to provide a system that maintains the adjustment made reliably.

A further preferred object of the present invention is to provide an adjustment system that is easy and economical to manufacture.

### GENERAL INTRODUCTION

According to a first general aspect thereof, the present invention relates to a bicycle comprising a frame (5), a rear wheel (10), a suspension system (12) of the rear wheel with respect to the frame allowing a predetermined relative displacement (H1) between them, a system for driving the motion (15) from a crankset (20) to the rear wheel (10), wherein the drive system (15) comprises a crankset (20) fixed to the frame (5), a hub and pinions assembly (22) fixed to the rear wheel (10), rotatable about their common rotation axis and a drive chain (24) placed to connect them directly to each other, wherein the crankset (20) and the hub and pinions assembly (22) each comprise at least one gear wheel (26) engaged by said chain and a rotation shaft (44), wherein between the gear wheel and the shaft of at least one of said crankset and said hub and pinions assembly there is operatively interposed a compensation device (40) placed to allow a compensation angular stroke (A1) between them from a rest position corresponding to an absence of chain pull, to a compensation position, corresponding to an action of chain pull generated by said reciprocal displacement, and vice versa, wherein said compensation stroke is limited to a predetermined angle (A1), said compensation device (40) comprises two main bodies (46, 48) that are rotatable with respect to each other and integrally respectively to the gear wheel (26) and to the shaft (44),
the compensation device (40) further comprises at least one abutment element 102, integral with one of the two main bodies (46, 48), interposed between a rest end element (104) and a compensation end element (62), which are integral with the other main body, wherein the abutment element (102) abuts alternately against the end elements (104, 62) defining the compensation stroke (A1);
characterized in that said compensation device (40) comprises an adjustment system (100) of said predetermined angle wherein at least one of the abutment element (102), the rest end element (104) and the compensation end element (62) have an adjustable position with respect to the others.

According to some preferred embodiments, between the two main bodies (46, 48) there are operatively interposed recall means towards the rest position in which the abutment element (102) is in abutment on the rest end element (104), corresponding to a condition of absence of chain pull, wherein the adjustment means adjust a preload of said recall means.

In such a case, preferably at least the rest end element (104) has an adjustable position with respect to the relative main body (46) with which it moves integrally.

Preferably between the abutment element (102) and the rest end element (104) there are interposed means for damping (108) the abutment between the two elements, wherein the damping means (108) are antagonistic to the recall means (72).

According to some preferred embodiments, the abutment element (102) and the compensation end element (62) have a fixed position with respect to their main bodies (46, 48) with which they move integrally.

In general it is preferred that the at least one adjustable position element comprises a rack (104) moved by a toothed pin (110), wherein the rack and the pin are rotationally integral with the same main body (48), wherein the adjustment system (100) comprises a device for locking and unlocking (115) the pin (110) with respect to the main body (48) so as to prevent or allow respectively its use for the adjustment of the compensation stroke (A1), and to prevent its displacement due to a possible recall preload of the compensation system towards a rest position.

Preferably, the locking and unlocking device (115) comprises a conical seat (118) for a complementary conical portion (120) of the pin (110), and pulling means (122) that can be activated and deactivated to push the tapers towards each other.

In this case, preferably the bicycle comprises preloading means (130) acting at least when the pin (110) is unlocked to push its taper (120) into the taper of the seat (118), between the two main bodies (46 and 48) there being present a recall preload (72) of their relative position towards a rest position, where the preloading means of the pin (130) are calibrated to prevent the displacement of the pin due to the recall preload between the main bodies (46, 48).

According to a second general aspect thereof, the present invention relates to a compensation device (40) of the type indicated above.

According to a third general aspect thereof, the present invention relates to a crankset and/or a hub and pinions assembly comprising a compensation device of the type indicated above.

### DETAILED DESCRIPTION

Further characteristics and advantages of the present invention will become clearer from the following detailed description of some preferred embodiments thereof, with reference to the appended drawings and provided by way of indicative and non-limiting example. In such drawings:
- figure 1 schematically depicts a bicycle according to the present invention;
- figure 2 depicts the detail of the drive system of figure 1;
- figure 3 depicts the crankset of the drive system of figure 2;
- figure 4 depicts the compensation device of the crankset of figure 3;
- figures 5 and 6 respectively depict an exploded view and a sectional view of the compensation device of figure 4;
- figures 7 and 8 respectively depict the rest position and the opposite position of maximum compensation corresponding to an adjustment that allows a first compensation stroke A1;
- figures 9 and 10 respectively depict the rest position and the opposite position of maximum compensation corresponding to an adjustment that allows a second compensation stroke A1 greater than that of figures 7 and 8;
- figure 11 depicts in section the device for adjusting the compensation stroke of the bicycle of the previous figures;
- figure 12 shows a variant of figure 11 and comprises means of reference of the adjustment position.

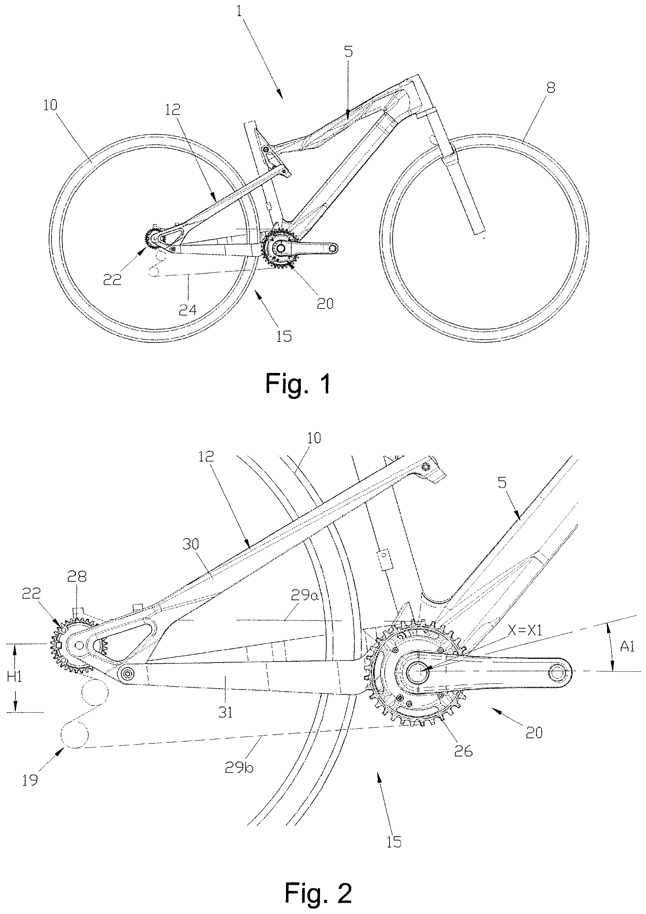

Figure 1 shows a bicycle according to the present invention, indicated as a whole with reference number 1.

The bicycle 1 comprises a frame 5, a front wheel 8, a rear wheel 10, a suspension system 12 of the rear wheel 10, a drive system 15 for putting the rear wheel 10 into rotation by means of a crankset 20 fixed to the frame 5.

The suspension system 12 may be of any applicable type, for example it comprises suspension arms 30, 31 which are articulated to one another and to the frame to allow a predetermined oscillation of the wheel 10, and it comprises oscillation damping means (not shown).

In addition to the crankset 20, the drive system 15 also comprises a rear hub and pinions assembly 22 fixed to the wheel 10 and a drive chain 24 which transmits the motion between the two.

During use, the oscillation H1 of the rear wheel 10 results in the oscillation of the hub assembly 22 with respect to the crankset 20 and accordingly, a pull of the chain 24.

The crankset 20 and the rear hub and pinions assembly 22 in particular each comprise at least one gear wheel 26 and 28, and the chain 24 forms a ring with which it engages them, both having two stretches 29a and 29b suspended between said wheels. When the rear wheel 10 oscillates upwards due to a bump or a jump, the chain is subjected to a pull. The phenomenon is known with the name "pedal kickback".

In general, the upper stretch of chain 29a is subjected to the pull, while the lower stretch 29b is slack. This may occur for example, because it in general is preferable for the drive system to comprise a gear 19 with a knuckle arm, for example of the traditional type comprising a rocker lever and cage, oscillating due to elastic suspension which compensates for the pull stresses on the lower stretch 29b of the chain.

In the following we will describe a chain pull compensation device 40 applied to the crankset 20. What is described with reference to the application of the compensation device to the crankset is applicable specularly to the application to the hub and/or pinions of the rear wheel.

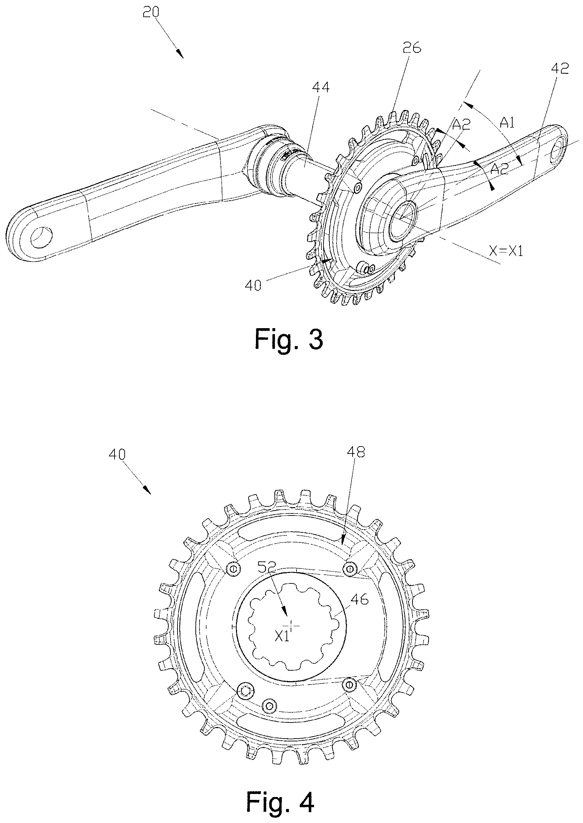

With reference to figure 3, crankset 20 comprises a pair of cranks 42 coupled to a drive shaft 44 that is rotatable about an axis X, to drag the gear wheel 26 into rotation.

Between the cranks and the gear wheel 26 there is operatively interposed the compensation device 40, comprising an adjustment system 100.

The compensation device 40 allows a relative rotation A1 between the cranks 42 and the gear wheel 26 by a predetermined extent. The extent of A1 is adjustable by the adjustment system 100 as will be clarified later, and determines the amount of oscillation H1 that can be compensated for, as well as the extent of idle travel of the crank felt when resuming pedalling.

The relative rotation A1 is also called the compensation stroke and takes place both in the forward and reverse direction between two extremes known as "end-of-stroke", in particular there is an extreme of rest end-of-stroke 104, corresponding to the absence of chain pull, and an extreme of compensation end-of-stroke 62, corresponding to the position assumed in the presence of the maximum compensable chain pull.

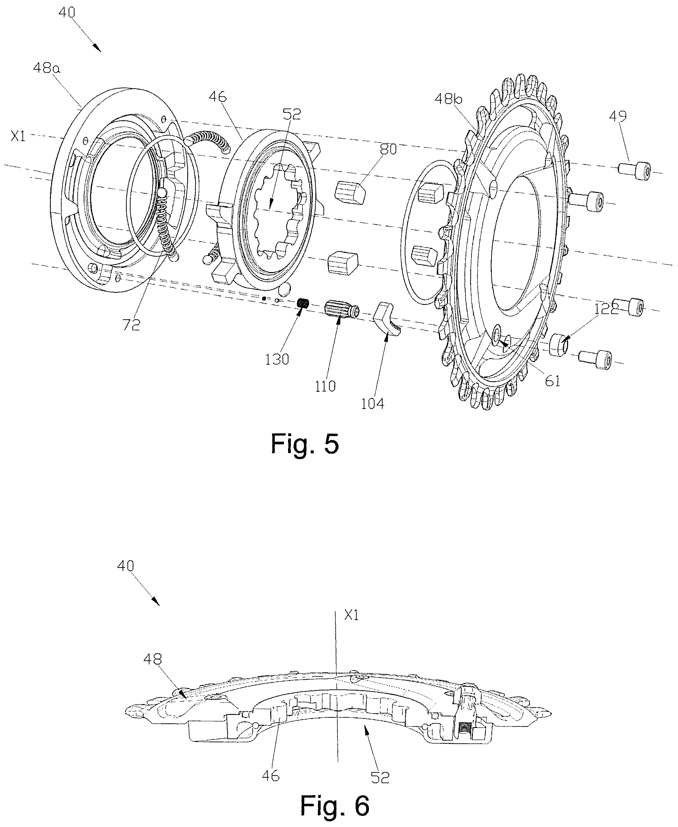

With reference to figures 4, 5 and 6, the compensation device 40 comprises a first and a second main body 46, 48 which are coupled rotatable with respect to each other about an axis X1.

The first main body 46 comprises an opening 52 with a shape complementary to a profile shaped for transmitting torque of the shaft 44 (not shown) and such whereby the rotation axes X and X1 of the shaft and of the compensation device 40 coincide under assembled condition on the crankset 20. The first main body 46 is therefore generally rotationally integral with the shaft and the crank 42.

The second main body 48 is a shell comprising the crown gear 26 or a plurality of coupling points 61 to the crown gear 26. The shell 48 preferably is divided into two half-shells 48a and 48b that can be coupled to and uncoupled from each other. The first main body 46 is housed in the second main body 48 in rotatable manner with respect thereto, about axis X of the shaft 44. The first body 46 is retained in the second body 48 when the two half-shells 48a and 48b are tightened to each other, for example by means of screws 49.

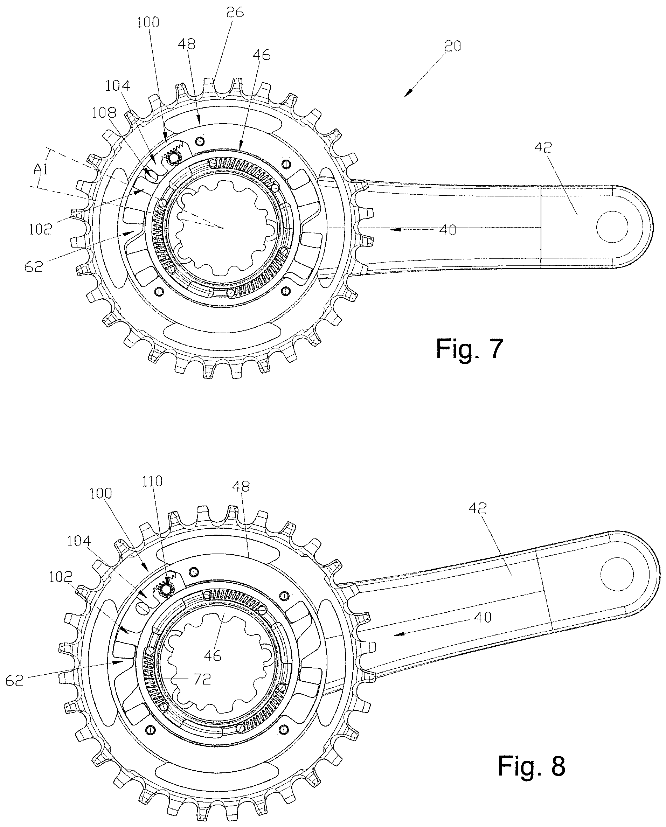

With reference to figures 7 and 8, the compensation device 40 is shown mounted in the crankset 20 with the half-shell 48a removed for descriptive clarity. The crankset is of the type intended to be mounted on the right-hand side of the bicycle, as seen by an observer straddling the bicycle and with reference to the advancement direction.

The device 40 comprises means for defining the compensation stroke A1 comprising at least one abutment element 102, integral with one of the two main bodies 46 and 48, interposed between a pair of end elements 104 and 62 of the compensation stroke A1, which are integral with the other main body. The abutment element 102 abuts alternately against the end elements 104 and 62 defining the stroke A1. In particular, as shown in figure 7, when the abutment element 102 is in abutment on the end element 104, the compensation device 40 is in the rest position, corresponding to the absence of chain pull, that is when the suspension system is extended and the rear wheel is therefore at its maximum length of the travel H1. For this reason, the element 104 is also called the rest end element.

When, as shown in figure 8, the abutment element 102 is in abutment on the end element 62, the device 40 is in the maximum compensation position, i.e. in the presence of a chain pull that rotated the main bodies 46 and 48 with respect to each other by an extent equal to the compensation stroke A1, where the chain pull was generated by a rear wheel travel that reduced the length H1 with respect to the rest position. For this reason, the element 62 is also called compensation end element.

The adjustment system 100 provides that at least one of the abutment element 102, the rest end element 104, and the compensation end element 62 have an adjustable position with respect to the others. Preferably at least one of the abutment element 102 and the rest end element has an adjustable position with respect to the other, even more preferably at least the rest end element 104 (or only it) has an adjustable position with respect to the relative body with which it moves integrally.

Between the main bodies 46 and 48 there are generally interposed recall means 72 which keep the compensation device 40 in the rest position, whereby they act in opposition to the chain pull. The recall means 72 are, for example, elastic and preferably comprise one or more springs, e.g. helical springs housed in circumferential seats obtained between the two main bodies 46 and 48. Said elastic means 72 are compressed by the relative rotation between the main bodies 46 and 48 during the stroke A1 to go from the rest position to the maximum compensation position.

In addition, between the elements 102 and 104 of the adjustment system 100 there is preferably interposed a damping element 108, for example an elastomeric material body to cushion their abutment at the respective end of the stroke A1. Said damping element is compressed when the device 40 is in the rest configuration. In the rest configuration the recall means 72 and the damping element 108 are antagonistic, i.e. the element 108 is compressed in opposition to the recall action of the elastic means 72.

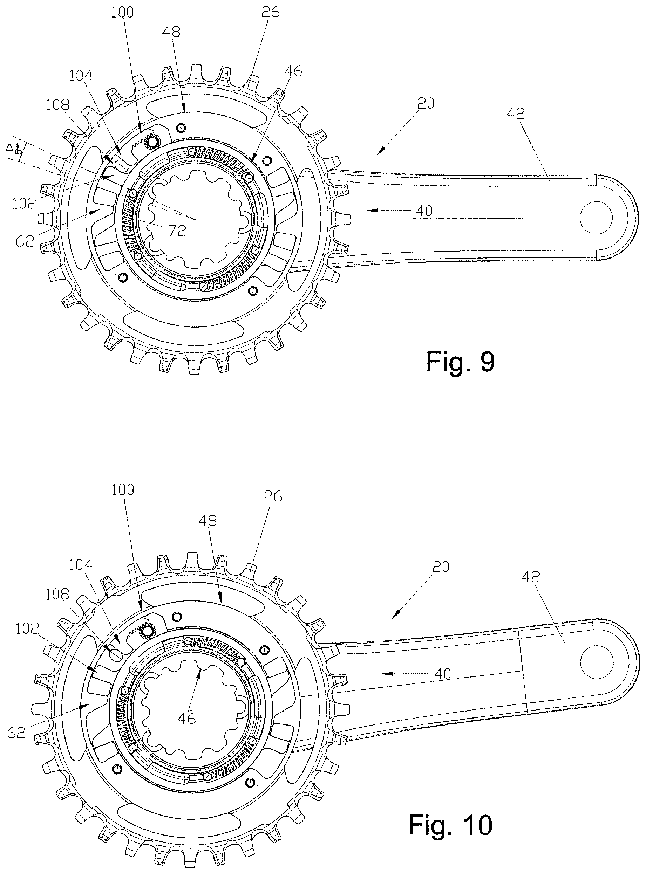

Figures 7 and 8 show the example respectively of a rest position and a compensation position corresponding to an adjustment of the system 100 placed to define a first stroke A1. Figures 9 and 10 show the same crankset with the adjustment system 100 placed to define a stroke A1 smaller than that of figures 7 and 8 by displacing the end element 104 by a predetermined angular sector with respect to the main body 46 to which it is rotationally integral.

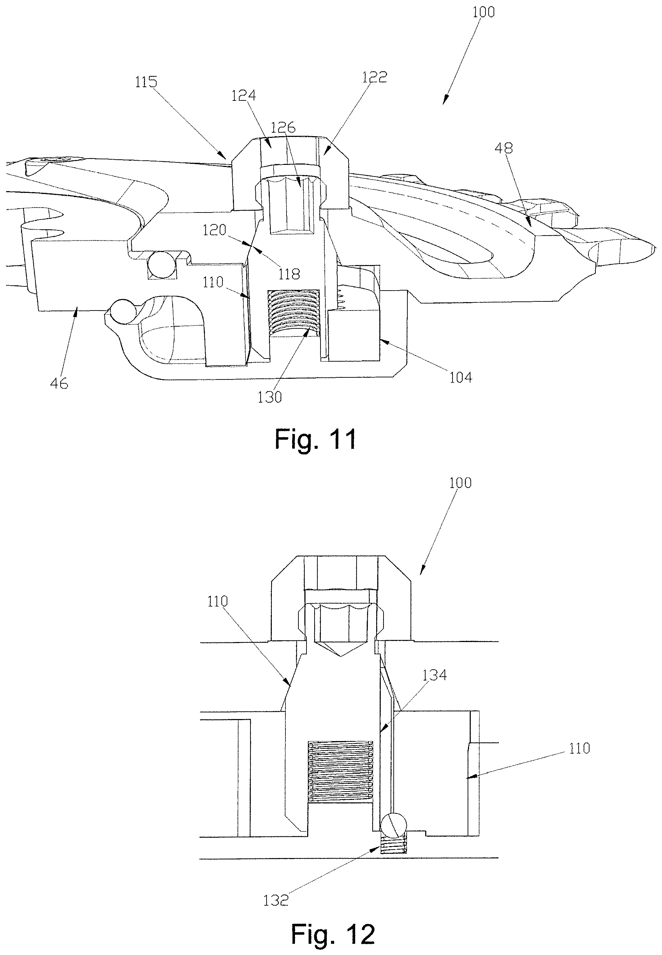

In this regard, the adjustment system is shown in greater detail in figure 11.

It comprises the rack-shaped rest end element 104, moved by a toothed pin 110 carried by the main body 48.

The system 100 comprises a device for locking and unlocking 115 the pin 110 with respect to the main body 48 so as to prevent or allow its use for the adjustment of the compensation stroke A1, respectively.

The locking and unlocking system comprises a conical seat 118 for a complementary conical portion 120 of the pin 110, and a nut 122 screwed to one end of the pin and abutting on the main body 48 to place the pin under traction and generate the wedging of the cone in the seat. When the pin is placed under traction it is locked, vice versa it is unlocked and can rotate with respect to the main body 48 to move the rack 104. The pin and the nut have respective seats 124 and 126 of engagement with a tool that are nested between them, where, for example, the seat of the pin is at a head where there is a thread to which the nut 122 is screwed. In general, the pin has an operating interface accessible from the outside of the compensation device, for example it is protruding from a side of the main body 48, so that it is not necessary to disassemble the device in order to carry out the adjustment.

The adjustment system 100 also comprises preloading means 130 of the pin 110 that act to push its taper 120 into the taper of the seat 118, they comprise for example elastic means, for example a spring. The preloading means act when the pin is unlocked to prevent it from displacing with respect to the set adjustment position due to the effect of the recall means 72.

In use, the user unscrews the nut 122 to release the pin 110, then rotates the pin 110 to move the rack 104 until the desired compensation stroke A1 is achieved, and locks the pin 110 again by tightening nut 122.

As can best be seen in figure 12, it is optionally possible to provide reference means of the adjustment, for example comprising a grub screw 132 pushed by a relative spring to engage the teeth 134 of the pin to provide a sound reference to the amount of rotation imposed during the adjustment, in fact the grub screw will generate a click after climbing over each tooth.

As will be appreciated from the comparison of figures 8 and 10, in the compensation position the respective abutment element 102 is stopped against the compensation end 62. This position is not changed by the adjustment system 100, since in the example illustrated it only acts on the position of the rest end 104 and not on the compensation end 62.

As will be noted, in general the effect of the adjustment of the compensation stroke A1 by the adjustment system 100 is also to preload the recall means 72, in the example illustrated the springs 72, so that when pedalling is resumed there is a lesser feeling of idle stroke.

In general, we also note that the recall means are damping means 72 of the compensation angular stroke A1, operatively interposed between the first and the second main body 46 and 48 and acting throughout the compensation stroke A1 towards the compensation position, in any adjustment position of the system 100.

As mentioned above, the damping elements 108 instead generally represent damping means antagonistic to the previous ones, active only in a predetermined angular stretch of end-of-stroke A1 at the rest position. They avoid the kickback for the return from the compensation position to the rest position.

When used to descend and/or in a jump, the driver rests on the pedals with the cranks 42 arranged horizontally (position of maximum stability). In this position the compensation device is in the rest condition of figure 7 or 9 due to the thrust of the recall means 72. When the rear wheel rises, due to an impact, it generates the chain pull that drags the gear wheel 26 into rotation with respect to the cranks 52 for the compensation stroke stretch A1, placing the compensation device 40 in the maximum stroke condition of figure 8 or 10, or in an intermediate condition, depending on the stress incurred. Such stroke is considered the outbound stroke.

When the driver resumes pedalling from the rest position of figure 7 or 9, the compensation device 40 undergoes the same rotation of outbound stroke A1 up to the maximum stroke position of figure 8 or 10.

The shorter the maximum possible compensation stroke A1 is by means of the adjustment system, for example reaching a position as in figures 7 and 8, the more fluid and immediate the restart of the pedalling is due to the greater preload of the recall means 72, to the detriment of a lesser compensation of the chain pull, which may not be total in the bigger jumps. Conversely, the greater the maximum possible compensation stroke A1, as in figures 9 and 10, the greater the extent of travel that the rear wheel will be able to make without generating a chain pull, however in the face of a less progressive pedalling restart, due to the lower preload of the recall means 72.

It is noted that, in the preferred example in which the maximum compensation stroke A1 is adjusted by changing only the position of the rest end 104, the system is more robust and stable, since the adjustment system 100 does not have to oppose the stresses deriving from the received jumps, but only those of the recall means 72 when returning to the rest position, preferably mitigated by the damping element 108.

In general, the adjustment of the position of the rest end element 104 with respect to the main body 48 has been described, however, the person skilled in the art will be able to make the necessary modifications for applications in which in addition or alternatively the adjustable element is the compensation end element 62 or the abutment element 102.

### GENERAL INTERPRETATION OF TERMS

In understanding the object of the present invention, the term "comprising" and its derivatives, as used herein, are intended as open-ended terms that specify the presence of declared characteristics, elements, components, groups, integers and/or steps, but do not exclude the presence of other undeclared characteristics, elements, components, groups, integers and/or steps. The above also applies to words that have similar meanings such as the terms "comprised", "have" and their derivatives. Furthermore, the terms "part", "section", "portion", "member" or "element" when used in the singular can have the double meaning of a single part or a plurality of parts. As used herein to describe the above executive embodiment(s), the following directional terms "forward", "backward" "above", "under", "vertical", "horizontal", "below" and "transverse", as well as any other similar directional term, refers to the embodiment described in the operating position. Finally, terms of degree such as "substantially", "about" and "approximately" as used herein are intended as a reasonable amount of deviation of the modified term such that the final result is not significantly changed.

While only selected embodiments have been chosen to illustrate the present invention, it will be apparent from this description to those skilled in the art that various modifications and variations can be made without departing from the scope of the invention as defined in the appended claims. For example, the sizes, shape, position or orientation of the various components can be modified as needed and/or desired. The components shown which are directly connected or in contact with each other can have intermediate structures arranged between them. The functions of one element can be performed by two and vice versa. The structures and functions of one embodiment can be adopted in another embodiment. All the advantages of a particular embodiment do not necessarily have to be present at the same time. Any characteristic that is original compared to the prior art, alone or in combination with other characteristics, should also be considered a separate description of further inventions by the applicant, including the structural and/or functional concepts embodied by such characteristics. Therefore, the foregoing descriptions of the embodiments according to the present invention are provided for illustrative purposes only and not for the purpose of limiting the invention as defined by the appended claims and their equivalents.

## Claims

1. Bicycle comprising a frame (5), a rear wheel (10), a suspension system (12) of the rear wheel with respect to the frame allowing a predetermined relative displacement (H1) between them, a system for driving the motion (15) from a crankset (20) to the rear wheel (10), wherein the drive system (15) comprises a crankset (20) fixed to the frame (5), a hub and pinions assembly (22) fixed to the rear wheel (10), and a drive chain (24) placed to connect them directly to each other, wherein the crankset (20) and the hub and pinions assembly (22) are subjected to reciprocal displacement (H1) by the action of the suspension system, where the crankset (20) and the hub and pinions assembly (22) each comprise at least one gear wheel (26) engaged by said chain and a rotation shaft (44), wherein between the gear wheel and the shaft of at least one of said crankset and said hub and pinions assembly there is operatively interposed a compensation device (40) placed to allow an compensation angular stroke (A1) between them from a rest position corresponding to an absence of chain pull, to a compensation position, corresponding to an action of chain pull generated by said reciprocal displacement, and vice versa, wherein said compensation stroke is limited to a predetermined angle (A1), said compensation device (40) comprises two main bodies (46, 48) that are rotatable with respect to each other and integrally respectively to the gear wheel (26) and to the shaft (44),
the compensation device (40) further comprises at least one abutment element (102), integral with one of the two main bodies (46, 48), interposed between a rest end element (104) and a compensation end element (62), which are integral with the other main body, wherein the abutment element (102) abuts alternately against the end elements (104, 62) defining the compensation stroke (A1);
**characterized in that** said compensation device (40) comprises an adjustment system (100) of said predetermined angle wherein at least one of the abutment element (102), the rest end element (104) and the compensation end element (62) have an adjustable position with respect to the others.

2. Bicycle according to claim 1, **characterized in that** between the two main bodies (46, 48) there are operatively interposed recall means towards the rest position in which the abutment element (102) is in abutment on the rest end element (104), corresponding to a condition of absence of chain pull, wherein the adjustment means adjust a preload of said recall means.

3. Bicycle according to claim 2, **characterized in that** at least the rest end element (104) has an adjustable position with respect to the relative main body (46) with which it moves integrally.

4. Bicycle according to claim 3, **characterized in that** between the abutment element (102) and the rest end element (104) there are interposed means for damping (108) the abutment between the two elements.

5. Bicycle according to any one of the preceding claims, **characterized in that** the abutment element (102) and the compensation end element (62) have a fixed position with respect to the relative main bodies (46, 48) with which they move integrally.

6. Bicycle according to any one of the preceding claims, **characterized in that** the at least one adjustable position element comprises a rack (104) moved by a toothed pin (110), wherein the rack and the pin are rotationally integral with the same main body (48), wherein the adjustment system (100) comprises a device for locking and unlocking (115) the pin (110) with respect to the main body (48) so as to prevent or allow respectively its use for the adjustment of the compensation stroke (A1).

7. Bicycle according to claim 6, **characterized in that** the locking and unlocking device (115) comprises a conical seat (118) for a complementary conical portion (120) of the pin (110), and pulling means (122) that can be activated and deactivated to push the tapers towards each other.

8. Bicycle according to claim 7, **characterized in that** it comprises preloading means (130) acting at least when the pin (110) is unlocked to push its taper (120) into the taper of the seat (118), between the two main bodies (46 and 48) there being present a recall preload (72) of their relative position towards a rest position, where the preloading means of the pin (130) are calibrated to prevent the displacement of the pin due to the recall preload between the main bodies (46, 48).

## Patentansprüche

1. Fahrrad umfassend einen Rahmen (5), ein Hinterrad (10), ein Federungssystem (12) des Hinterrads für den Rahmen, was eine vorbestimmte, relative Verschiebung (H1) zwischen diesen erlaubt, ein System zum Antreiben der Bewegung (15) ausgehend von einer Kurbelgarnitur (20) zu dem Hinterrad (10), wobei das Antriebssystem (15) eine Kurbelgarnitur (20) umfasst, die am Rahmen (5) befestigt ist, eine Naben- und eine Ritzelanordnung (22), die an dem Hinterrad (10) befestigt ist, und eine Antriebskette (24), die dazu angeordnet ist, sie direkt miteinander zu verbinden, wobei die Kurbelgarnitur (20) und die Naben- und Ritzelanordnung durch die Bewegung des Federungssystems wechselseitiger Verschiebung (H1) ausgesetzt sind, wobei die Kurbelgarnitur (20) und die Naben- und Ritzelanordnung (22) jeweils wenigstens ein Zahnrad (26) umfassen, das mit der Kette und einer Drehwelle (44) in Eingriff steht, wobei zwischen dem Zahnrad und dem Schaft wenigstens einer Kurbelgarnitur und der Naben- und Ritzelanordnung (22) eine Ausgleichsvorrichtung (40) funktionsfähig eingesetzt werden kann, die dazu dient, einen kompensierenden Winkelhub (A1) zwischen ihnen zu platzieren, der von einer Ruhestellung entsprechend eines fehlenden Kettenzugs zu einer Ausgleichsposition entsprechend einer Bewegung des Kettenzugs wechselt, der durch die wechselseitige Verschiebung entsteht und umgekehrt, wobei der Ausgleichshub auf einen vorbestimmten Winkel (A1) beschränkt ist, wobei die Ausgleichsvorrichtung (40) zwei Hauptkörper (46, 48) umfasst, die zueinander und einstückig jeweils zu dem Zahnrad (26) und dem Schaft (44) drehbar sind,
wobei die Ausgleichsvorrichtung (40) ferner wenigstens einen Anlageabschnitt (102) umfasst, der einstückig mit einem der beiden Hauptkörper (46, 48) ausgebildet ist, der zwischen einem Stützendelement (104) und einem Ausgleichsendelement (62) eingesetzt ist, die einstückig mit dem anderen Hauptkörper ausgebildet sind, wobei der Anlageabschnitt (102) abwechselnd an den Endelementen (104, 62) anliegt, die den Ausgleichshub (A1) definieren;
**dadurch gekennzeichnet, dass** die Ausgleichsvorrichtung (40) ein Einstellsystem (100) des vorbestimmten Winkels umfasst, wobei wenigstens einer der Anlageabschnitte (102), das Stützendelement (104) und das Ausgleichsendelement (62) eine zueinander einstellbare Position aufweisen.

2. Fahrrad nach Anspruch 1, **dadurch gekennzeichnet, dass** zwischen den beiden Hauptkörpern (46, 48) funktionsfähig Rückstellmittel in Richtung der Ruhestellung eingesetzt sind, in welcher der Anlageabschnitt (102) an dem Stützendelement (104) anliegt, was einem Zustand eines fehlenden Kettenzugs entspricht, wobei die Einstellungsmittel eine Vorspannung des Rückstellmittels anpassen.

3. Fahrrad nach Anspruch 2, **dadurch gekennzeichnet, dass** wenigstens das Stützendelement (104) eine einstellbare Position gegenüber dem relativen Hauptkörper (46) aufweist, mit dem es sich einstückig bewegt.

4. Fahrrad nach Anspruch 3, **dadurch gekennzeichnet, dass** zwischen dem Anlageabschnitt (102) und dem Stützendelement (104) Mittel (108) eingesetzt sind, um die Anlage zwischen den beiden Elementen zu dämpfen.

5. Fahrrad nach einem der vorangehenden Ansprüche, **dadurch gekennzeichnet, dass** der Anlageabschnitt (102) und das Ausgleichsendelement (62) eine feste Position gegenüber den relativen Hauptkörpern (46, 48) aufweisen, mit welchen sie sich einstückig bewegen.

6. Fahrrad nach einem der vorangehenden Ansprüche, **dadurch gekennzeichnet, dass** das wenigstens eine einstellbare Positionierelement eine Stange (104) umfasst, die von einem Zahnstift (110) bewegt wird, wobei die Stange und der Stift mit dem gleichen Hauptkörper (48) einstückig drehbar ausgebildet sind, wobei das Einstellungssystem (100) eine Vorrichtung zum Verriegeln und Entriegeln (115) des Stifts (110) bezüglich des Hauptkörpers (48) umfasst, um dessen Verwendung für die Einstellung des Ausgleichshubs (A1) entweder zu verhindern oder zu ermöglichen.

7. Fahrrad nach Anspruch 6, **dadurch gekennzeichnet, dass** die Verriegelungs- und Entriegelungsvorrichtung (115) eine konische Aufnahme (118) für einen komplementären konischen Abschnitt (120) des Stifts (110) und Zugmittel (122) umfasst, die aktiviert und deaktiviert werden können, um die Verjüngungen zueinander zu drücken.

8. Fahrrad nach Anspruch 7, **dadurch gekennzeichnet, dass** es Vorspannungsmittel (130) umfasst, die sich wenigstens dann bewegen, wenn der Stift (110) entriegelt ist, um dessen Verjüngung (120) in die Verjüngung der Aufnahme (118) zu drücken, wobei zwischen den beiden Hauptkörpern (46 und 48) eine Rückstellvorspannung (72) ihrer Relativposition in Richtung einer Ruhestellung besteht, wobei die Vorspannungsmittel des Stifts (130) dazu kalibriert sind, die Verschiebung des Stifts aufgrund der Rückstellvorspannung zwischen den Hauptkörpern (46, 48) zu verhindern.

## Revendications

1. Bicyclette comprenant un cadre (5), une roue arrière (10), un système de suspension (12) de la roue arrière par rapport au cadre permettant un déplacement relatif prédéterminé (H1) entre ceux-ci, un système d'entraînement du mouvement (15) depuis un pédalier (20) jusqu'à la roue arrière (10), dans laquelle le système d'entraînement (15) comprend un pédalier (20) fixé au cadre (5), un ensemble moyeu et pignons (22) fixé à la roue arrière (10), et une chaîne d'entraînement (24) placée pour les relier directement l'un à l'autre, dans laquelle le pédalier (20) et l'ensemble moyeu et pignons (22) sont soumis à un déplacement réciproque (H1) sous l'action du système de suspension, où le pédalier (20) et l'ensemble moyeu et pignons (22) comprennent chacun au moins une roue dentée (26) engrenée par ladite chaîne et un arbre de rotation (44), dans laquelle entre la roue dentée et l'arbre d'au moins l'un dudit pédalier et dudit ensemble moyeu et pignons, est interposé de manière fonctionnelle un dispositif de compensation (40) placé pour permettre une course angulaire de compensation (A1) entre ceux-ci depuis une position de repos correspondant à une absence de traction de la chaîne, jusqu'à une position de compensation, correspondant à une action de traction de la chaîne générée par ledit déplacement réciproque, et inversement, dans laquelle ladite course de compensation est limitée à un angle prédéterminé (A1), ledit dispositif de compensation (40) comprend deux corps principaux (46, 48) qui sont rotatifs l'un par rapport à l'autre et solidaires respectivement de la roue dentée (26) et de l'arbre (44),
le dispositif de compensation (40) comprend en outre au moins un élément de butée (102), solidaire de l'un des deux corps principaux (46, 48), interposé entre un élément d'extrémité de repos (104) et un élément d'extrémité de compensation (62), lesquels sont solidaires de l'autre corps principal, dans laquelle l'élément de butée (102) vient en butée alternativement contre les éléments d'extrémité (104, 62), définissant la course de compensation (A1) ;
**caractérisée en ce que** ledit dispositif de compensation (40) comprend un système de réglage (100) dudit angle prédéterminé, dans lequel au moins un élément parmi l'élément de butée (102), l'élément d'extrémité de repos (104) et l'élément d'extrémité de compensation (62) présente une position réglable par rapport aux autres.

2. Bicyclette selon la revendication 1, **caractérisée en ce que**, entre les deux corps principaux (46, 48) se trouvent des moyens de rappel interposés de manière fonctionnelle vers la position de repos dans laquelle l'élément de butée (102) est en appui sur l'élément d'extrémité de repos (104), correspondant à un état d'absence de traction de la chaîne, dans laquelle les moyens de réglage ajustent une précharge desdits moyens de rappel.

3. Bicyclette selon la revendication 2, **caractérisée en ce que**, au moins l'élément d'extrémité de repos (104) présente une position réglable par rapport au corps principal (46) correspondant avec lequel il se déplace solidairement.

4. Bicyclette selon la revendication 3, **caractérisée en ce que**, entre l'élément de butée (102) et l'élément d'extrémité de repos (104) sont interposés des moyens pour amortir (108) l'appui entre les deux éléments.

5. Bicyclette selon l'une quelconque des revendications précédentes, **caractérisée en ce que** l'élément de butée (102) et l'élément d'extrémité de compensation (62) ont une position fixe par rapport aux corps principaux (46, 48) correspondants avec lesquels ils se déplacent solidairement.

6. Bicyclette selon l'une quelconque des revendications précédentes, **caractérisée en ce que** ledit au moins un élément à position réglable comprend une crémaillère (104) déplacée par une broche dentée (110), dans laquelle la crémaillère et la broche sont solidaires en rotation avec le même corps principal (48), dans laquelle le système de réglage (100) comprend un dispositif de verrouillage et de déverrouillage (115) de la broche (110) par rapport au corps principal (48) de manière à empêcher ou à permettre, respectivement, son utilisation pour le réglage de la course de compensation (A1).

7. Bicyclette selon la revendication 6, **caractérisée en ce que** le dispositif de verrouillage et de déverrouillage (115) comprend un siège conique (118) pour une partie conique complémentaire (120) de la broche (110), et des moyens de traction (122) qui peuvent être activés et désactivés pour pousser les parties coniques l'une vers l'autre.

8. Bicyclette selon la revendication 7, **caractérisée en ce qu'**elle comprend des moyens de précharge (130) agissant au moins lorsque la broche (110) est déverrouillée pour pousser sa partie conique (120) dans la partie conique du siège (118), entre les deux corps principaux (46 et 48) étant présente une précharge de rappel (72) de leur position relative vers une position de repos, où les moyens de précharge de la broche (130) sont calibrés pour empêcher le déplacement de la broche en raison de la précharge de rappel entre les corps principaux (46, 48).
